# EUROPEAN PATENT SPECIFICATION

(11) **EP 2 584 277 B1**
(45) Date of publication and mention of the grant of the patent: **11.07.2018**
(21) Application number: 12170285.6
(22) Date of filing: 31.05.2012
(51) Int. Cl.: F24F 3/06, F24F 11/00

(54) **Network system equipped with air conditioner and control method thereof**
Mit Klimaanlage ausgerüstetes Netzwerksystem und Steuerungsverfahren davon
Système de réseau équipé d'un conditionneur d'air et son procédé de commande

(30) Priority: 21.10.2011 KR 20110108242
(43) Date of publication of application: 24.04.2013
(73) Proprietor: LG Electronics Inc., Youngdungpo-gu Seoul 150-721 (KR)
(72) Inventor: Han, Seungjin, 153-802 Seoul (KR); Choi, Woojoo, 153-802 Seoul (KR); Lee, Seonghun, 153-802 Seoul (KR)
(74) Representative: Vossius & Partner Patentanwälte Rechtsanwälte mbB

(56) References cited:
- EP-A2- 1 953 468

## Description

The present disclosure relates to a network system equipped with an air conditioner and a control method thereof.

An air conditioner is a consumer electronic device for maintaining the air in a room to be in the most appropriate status according to use and purpose. For example, the air conditioner is used for controlling a room for a cool state in summer and a warm state in winter, regulating the humidity of a room, and cleaning the air in a room for a pleasant and clean state. In more detail, the air conditioner has a cooling cycle of compression, condensation, expansion, and evaporation processes of a refrigerant. Accordingly, the air conditioner may provide a cooling or heating operation of a set space (for example, an indoor space).

Such an air conditioner may include a separate type air conditioner having a separate indoor unit and outdoor unit and an integrated type air conditioner having an integrated indoor unit and outdoor unit, according to whether an indoor unit and an outdoor unit are separated or not. The outdoor unit includes a compressor and an indoor heat exchanger for exchanging heat with outdoor air, and the indoor unit includes an indoor heat exchanger for exchanging heat with indoor air.

When a cooling operation is performed in a cooling cycle, the outdoor heat exchanger serves as a condenser, and the indoor heat exchanger serves as an evaporator. On the contrary, when a heating operation is performed in a heating cycle, the indoor heat exchanger serves as a condenser, and the outdoor heat exchanger serves as an evaporator.

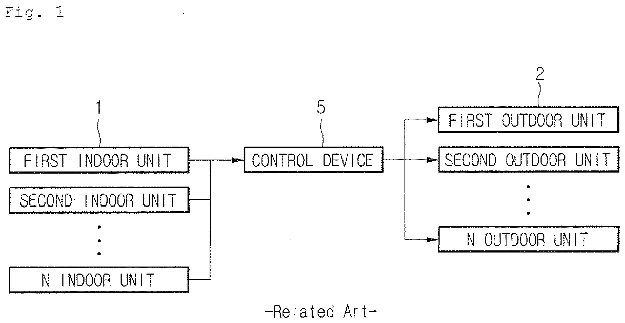

FIG. 1 is a view of a related art network system for operating an air conditioner including an indoor unit and an outdoor unit.

Referring to FIG. 1, the related art network system includes a plurality of indoor units 1 for discharging conditioned air into an indoor space, a plurality of outdoor units 2 in communication enabled connection to the plurality of indoor units 1, and a control device 5 for delivering a control signal generated from the indoor unit 1 to one of the plurality of outdoor units 2.

The control device 5 delivers a control signal to the specific outdoor unit matching a first indoor unit 1 when the control signal is generated from the first indoor unit 1 among the plurality of indoor units 1. According to the related art network system, the control device 5 only serves to deliver control information of the indoor unit 1 to the outdoor unit 2 after simply matching the indoor unit 1 to the outdoor unit 2.

However, the air conditioner may differently set state information or function information, i.e., operating standards, according to outdoor unit conditions and indoor loads. Accordingly, the state information or function information may be necessarily updated periodically or according to predetermined standards.

However, since there are typical limitations in remotely updating the above information, a user, who controls the air conditioner, feels inconvenient. For example, a service technician personally visits a place having an air conditioner installed and updates the state information or function information inconveniently.

EP 1 953 468 A2 relates to an air conditioning system and a program updating method thereof automatically updating a control program during operation of the air conditioning system, wherein a controller receives an updating program for updating the control program and updates the control program when receiving a request for updating the control program from the external host device during execution of the control program. EP 1 953 468 A2 thereby discloses a network system according to the preamble of claim 1.

It is an object of the invention to provide a network system equipped with an air conditioner and a control method.

This object is solved with the features of the independent claims.

The dependent claims relate to further aspects of the invention.

Embodiments provide a network system equipped with an air conditioner, whose information is easily updated by improving a part of a structure of a network system that controls the air conditioner.

In one embodiment, a network system equipped with an air conditioner includes: the air conditioner operating for air conditioning of a set space; a control device for updating set data in the air conditioner when being in a communication enabled connection to the air conditioner; and a control unit equipped in the air conditioner for receiving update data from the control device, wherein the control unit includes: an external memory for storing update data received from the control device; and an internal memory for selectively storing the update data stored in the external memory on the basis of whether an update execute signal is received from the control device.

In another embodiment, a control method of a network system including an air conditioner with at least one indoor and at least one outdoor unit and a control device for controlling an operation of the air conditioner includes: connecting the control device with the outdoor unit for communication; determining whether there are data that are to be updated from the control device to the outdoor unit; transmitting the data to the outdoor unit if there are the data; storing the data in a first memory of the outdoor unit; and storing the data from the first memory to a second memory of the outdoor unit when an update execute signal is generated from the control device.

The details of one or more embodiments are set forth in the accompanying drawings and the description below. Other features will be apparent from the description and drawings, and from the claims.

### BRIEF DESCRIPTION OF THE DRAWINGS

FIG. 1 is a block diagram illustrating a related art network system equipped with an air conditioner.
FIG. 2 is a view illustrating a network system according to a first embodiment.
FIG. 3 is a block diagram illustrating a configuration of an outdoor unit according to a first embodiment.
FIG. 4 is a flowchart illustrating a control method of a network system according to a first embodiment.
FIG. 5 is a block diagram illustrating a processing operation of update data in an outdoor unit according to a first embodiment.
FIG. 6 is a view illustrating a network system according to a second embodiment.
FIG. 7 is a flowchart illustrating a control method of a network system according to a second embodiment.

### DETAILED DESCRIPTION OF THE EMBODIMENTS

Reference will now be made in detail to the embodiments of the present disclosure, examples of which are illustrated in the accompanying drawings.

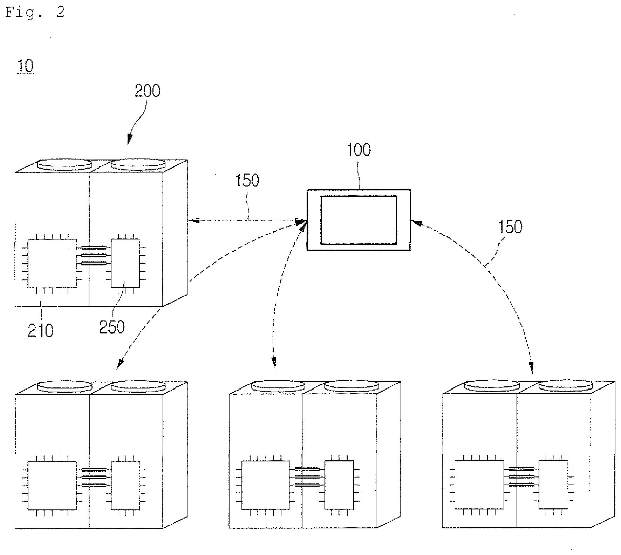

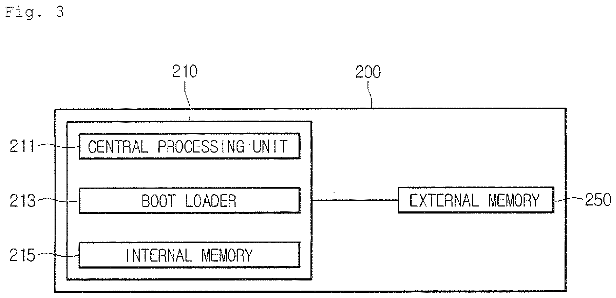

FIG. 2 is a view illustrating a network system according to a first embodiment. FIG. 3 is a block diagram illustrating a configuration of an outdoor unit according to the first embodiment.

Referring to FIGS. 2 and 3, the network system according to the first embodiment includes a control device 100 for transmitting data, i.e., an update target, to the outdoor unit 200, or delivering an update execute signal to the outdoor unit 200. Here, the data, i.e., the update target, may refer to update data or on-boarding data. Additionally, the outdoor unit 200 may refer to a plurality of outdoor units.

An air conditioner may set state information or function information in advance, which is the base of an operation, according to outdoor air condition or indoor load (for example, the number of operating indoor units), while operating according to a refrigerant cycle. Moreover, such information may be updated according to a predetermined condition. It is understood that the update data relate to the information.

The update data may include various temperature conditions (such as a temperature value or an outdoor temperature condition for a cycle) or an operating condition (such as an operating frequency or an operation rate) of a compressor.

Moreover, the control device 100 serves to deliver a control signal recognized by the indoor unit to the outdoor unit 200. The control signal may be understood as a predetermined signal for changing an operating condition of an air conditioner on the basis of an input command when a user inputs a predetermined command through the indoor unit. In brief, the control device 100 may monitor an operating state of the outdoor unit 200, and may control an operation of the outdoor unit 200 on the basis of the information recognized by the indoor unit.

A first communication interface 150 is prescribed between the control device 100 and the plurality of outdoor unit 200. The first communication interface 150 includes a RS485 communication method as a serial communication. The RS485 communication method provides a multi-party to multi-party communication.

The outdoor unit 200 includes a control unit for outdoor unit 210 for controlling an operation of the outdoor unit 210 or an air conditioner, and an external memory 250 for additionally or temporarily storing data that are to be processed by the control unit for outdoor unit 210.

The external memory 250 may be a nonvolatile memory where stable information storage of data may be possible. As one example, the external memory 250 may be a flash memory. If the external memory 250 is configured with a nonvolatile memory, even when an on-boarding process of the update data fails, the data may be recovered, so that stability of data processing may be secured.

The control unit for outdoor unit 210 includes a central processing unit 211 for processing data, an internal memory 215 for storing data that are to be processed by the central processing unit 211, and a boot loader 213 for reading update data (or images) stored in the external memory 250 to store (for example, on-board or write) them in the internal memory 215. Here, the boot loader 213 may serve to initialize the data of the internal memory 215 or the internal memory 215 where the update data are to be stored.

The internal memory 215 includes ROM or RAM. Also, to describe the distinction between memories, the external memory 250 may be referred to as a first memory and the internal memory 215 may be referred to as a second memory.

With the boot loader 213, the control unit for outdoor unit 210 may include a first area for processing a control signal (i.e., a control image) delivered from the control device 100 and a second area for processing the update data (i.e., an on-boarding image).

Moreover, although the control unit for outdoor unit 210 controls an outdoor unit as shown in FIG. 2, unlike this, the control unit for outdoor unit 210 may be understood as a configuration for controlling an air conditioner overall, i.e., a control unit in a broad sense. Accordingly, a mounting position of a control unit for controlling an air conditioner is not limited to an outdoor unit, and thus may be equipped in an indoor unit. For example, in the case of an integrated type air conditioner, a control unit may be simply equipped therein.

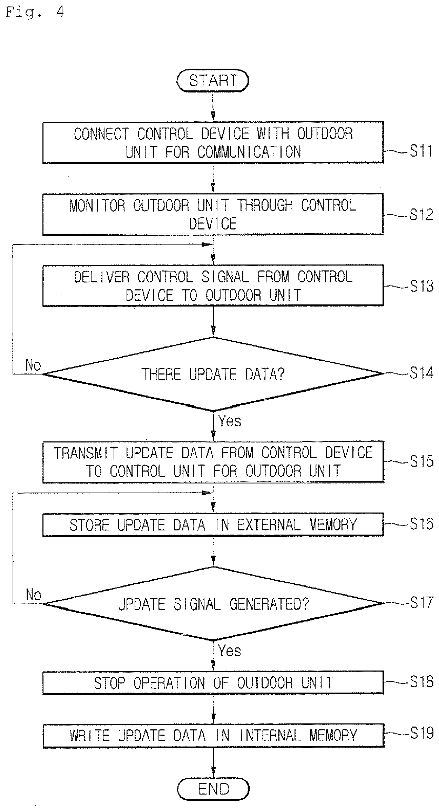

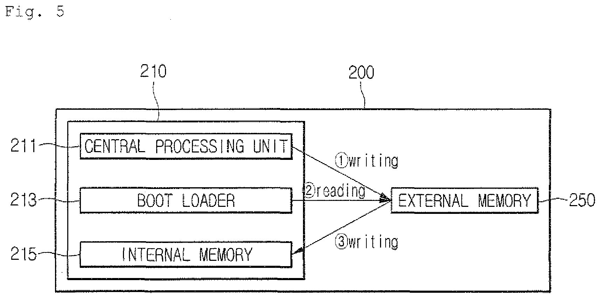

FIG. 4 is a flowchart illustrating a control method of a network system according to the first embodiment. FIG. 5 is a block diagram illustrating an operation for processing update data in an outdoor unit according to the first embodiment.

Referring to FIGS. 4 and 5, while the air conditioner according to the first embodiment operates, a communication connection is made between the control device 100 and the outdoor unit 200 in operation S11. Moreover, the control device 100 may monitor an operating state of the outdoor unit 200 in operation S12.

When a predetermined control signal relating to an operation of the outdoor unit 200 is recognized by the air conditioner, for example, a predetermined operating command is input to the outdoor unit 200, the control device 100 delivers the control signal to the outdoor unit 200. On the basis of the control signal, the outdoor unit 200 may operate in relation to a refrigerant cycle drive. As one example, when an operation of the air conditioner is turned off or a desired temperature in an indoor space is changed, according thereto, operations of a compressor or a blower fan may be performed in operation S13.

During such a process, it is determined whether there are data that are to be updated in the outdoor unit 200. Whether there are data that are to be updated may be recognized when the control device 100 monitors an operating state or operating information of the outdoor unit 200. If there are the update data, the update data may be transmitted from the control device 100 to the control unit for indoor unit 210 in operations S14 and S15.

Once the update data are transmitted to the control unit for outdoor unit 210, the central processing unit 211 writes the update data in the external memory 250 (refer to ① of FIG. 5). The update data are to be stored in the external memory 250 until an update execute signal is recognized. Then, an operation of storing such update data may be performed several times in operation S16.

While the update data are stored in the external memory 250, it is recognized whether an update execute signal occurs or not. Whether the update execute signal occurs or not may be determined on the basis of an automatically generated signal when a predetermined command is input through the control device 100 or an operation of the outdoor unit 200 stops.

In more detail, when an operator of the control device 100 inputs a predetermined command for update, an operation of the outdoor unit 200 stops. That is, when data updating is performed, an operation of the outdoor unit 200 stops.

Moreover, an operation of the outdoor unit 200 may stop in response to a predetermined control signal from the control device 100. As one example, the predetermined control signal includes the case that a power off command is input to an indoor unit. At this point, when the control device 100 may monitor an operation stop state of the outdoor unit 200, it may automatically transmit an update execute signal to the outdoor unit 200 in operations S17 and S18.

Once the update execute signal occurs, the update data may be written from the external memory 250 to the internal memory 215. In more detail, the boot loader 213 reads the update data stored in the external memory 250 (refer to ② of FIG. 5) and writes the update data in the internal memory 215 (refer to ③ of FIG. 5).

Moreover, while an update execute signal and a control signal of an outdoor unit are received simultaneously, control data and on-boarding data may be sequentially processed in the control unit for outdoor unit 210 (or may be stored in the internal memory 215). As one example, according to the amount or format of data, the update execute signal and the control signal may be alternately processed (or stored) at a time in operation S19.

In this manner, even when the update data are transmitted from the control device 100 to the outdoor unit 200, they are not directly stored in the internal memory 215, but are stored in the external memory 250 until an update execute signal is received. Once the update execute signal is received, the update data are stored in a batch. Therefore, the update data are processed easily and promptly.

Moreover, while the update data are processed, an air conditioner system or an outdoor unit stops. However, according to this embodiment, data are processed in a batch, so that an operation stop state of the air conditioner system or the outdoor unit may be minimized.

Additionally, data are simultaneously updated from the control device 100 to the plurality of outdoor units 200, so that an update process is convenient and instant.

Hereinafter, a second embodiment will be described. In comparison between the second embodiment and the first embodiment, there are differences in some components and a control method of a network system. Thus, only the differences will be described mainly, and the description and reference numerals of the first embodiment are cited with respect to the same portion as the first embodiment.

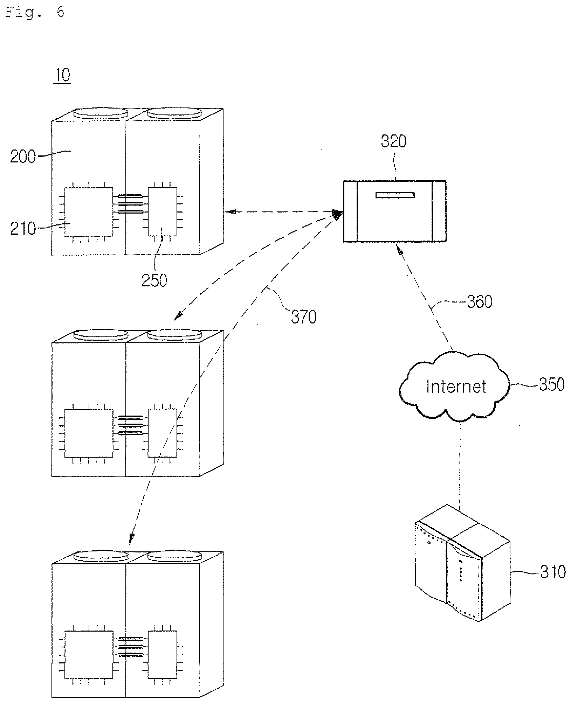

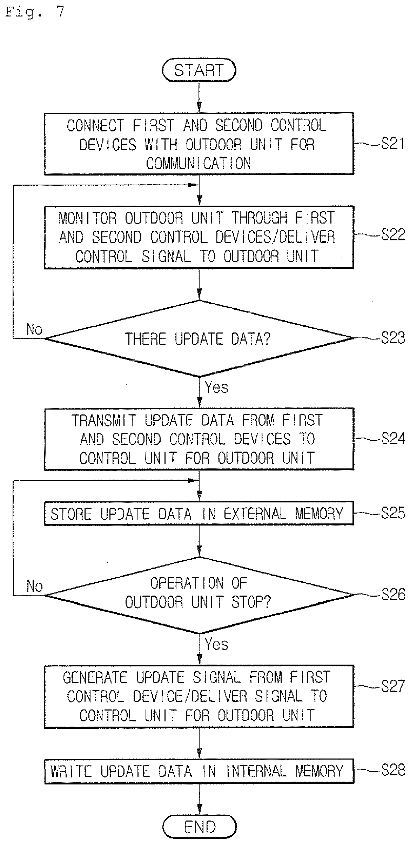

FIG. 6 is a view illustrating a network system according to the second embodiment. FIG. 7 is a flowchart illustrating a control method of a network system according to the second embodiment.

Referring to FIG. 6, the network system 10 according to the second embodiment includes control devices 310 and 320 for transmitting data, i.e., an update target, to a plurality of outdoor units 200, or delivering an update execute signal to the plurality of outdoor units 200.

The plurality of control devices 310 and 320 include a first control device 310 for monitoring an operating state of the plurality of outdoor units 200 and transmitting update data and an update execute signal, and a second control device 320 for transmitting data or a signal transmitted from the first control device 310 to the plurality of outdoor units 200 which are in a communication enabled connection with the first control device 310.

Moreover, the first control device 310 or the second control device 320 serves to deliver a control signal recognized by the indoor unit to the outdoor unit 200. The control signal may be understood as a predetermined signal for changing an operating condition of an air conditioner on the basis of an input command when a user inputs a predetermined command through the indoor unit. In brief, the first control device 310 or the second control device 320 may monitor an operating state of the outdoor unit 200, and may control an operation of the outdoor unit 200 on the basis of the information recognized by the indoor unit.

The second control device 320 may be equipped in a space or a building where the plurality of outdoor units 200 are installed, and the first control device 310 may be equipped being remotely spaced from the plurality of outdoor units 200 or the second control device 320. As one example, the second control device 320 may be equipped in a control center that controls the outdoor unit 200 or the air conditioner.

Moreover, the first control device 310 may be configured to control a plurality of second control devices 320. A first communication interface 360 is arranged between the first control device 310 and the second control device 320. The first communication interface 360 may operate using a TCP/IP method relating to a standard protocol that allows data transmission through internet 350.

Additionally, a second communication interface 370 is arranged between the second control device 320 and the plurality of outdoor unit 200. The second communication interface may operate using the RS485 communication method. Moreover, the second control device 320 may serve as a converter for converting a data format delivered through the first communication interface 360 into a data format that conforms the second communication interface 370.

The outdoor unit 200 includes a control unit for outdoor unit 210 for controlling an operation of the outdoor unit 210 or an air conditioner, and an external memory 250 for additionally or temporarily storing data that are to be processed in the control unit for outdoor unit 210. As regards the descriptions for a detailed structure and operation of the control unit for outdoor unit 210 and the external memory 250 reference is made to those of the first embodiment.

Referring to FIG. 7, a control method of a network system according to the second embodiment will be described.

Referring to FIG. 7, while the air conditioner according to the second embodiment operates, a communication connection is made between the first and second control devices 310 and 320 and a plurality of outdoor units 200 in operation S21. Moreover, the first and second control devices 310 and 320 may monitor an operating state of the outdoor unit 200 and may deliver a control signal for an operation of the outdoor unit 200 to the outdoor unit 200.

Then, when a predetermined control signal relating to an operation of the outdoor unit 200 is recognized by the air conditioner, for example, a predetermined operating command is input to the outdoor unit 200, the first and second control devices 310 and 320 deliver the control signal to the outdoor unit 200. On the basis of the control signal, the outdoor unit 200 may operate in relation to a refrigerant cycle drive in operation S22.

During such a process, it is determined whether there are data that are to be updated in the outdoor unit 200. Whether there are data that are to be updated may be recognized when the control device 100 monitors an operating state or operating information of the outdoor unit 200. If there are the update data, the data for update may be transmitted from the first and second control devices 310 and 320 to the control unit for outdoor unit 210 in operations S23 and S24.

Once the update data are transmitted to the control unit for outdoor unit 210, the central processing unit 211 writes the update data in the external memory 250 (refer to ① of FIG. 5). The update data are to be stored in the external memory 250 until an update execute signal is recognized. Then, an operation of storing such update data may be performed several times in operation S25.

While the update data are stored in the external memory 250, it is recognized whether the outdoor unit 200 operates or stops in operation S26. If the outdoor unit 200 stops, an update execute signal is generated from the first control device 310, and is delivered to the control unit for outdoor unit 210 via the second control device 320. That is, according to whether the outdoor unit 200 stops, the update execute signal may be automatically generated from the first control device 310 in operation S27.

However, as described in the first embodiment, the update execute signal may be generated in response to a predetermined command input through the first control device 310 or the second control device 320. At this point, when a predetermined command is input through the first control device 310 or the second control device 320, the outdoor unit 200 stops.

Once the update execute signal occurs, the update data may be written from the external memory 250 to the internal memory 215. In more detail, the boot loader 213 reads the update data stored in the external memory 250 (refer to ② of FIG. 5) and writes the update data in the internal memory 215 (refer to ③ of FIG. 5) .

Moreover, as described in the first embodiment, while an update execute signal and a control signal of an outdoor unit are received simultaneously, control data and on-boarding data may be sequentially processed in the control unit for outdoor unit 210 (or may be stored in the internal memory 215) in operation S28.

In this manner, even when the update data are transmitted from the first and second control devices 310 and 320 to the outdoor unit 200, they are not directly stored in the internal memory 215, but are stored in the external memory 250 until an update execute signal is received. Once the update execute signal is received, the update data are stored in a batch. Therefore, the update data are processed easily and promptly.

According to a network system equipped with an air conditioner, data regarding operations of the air conditioner are updated remotely, so that the air conditioner may be managed easily.

Additionally, an external memory is provided to an outdoor unit and update data are stored therein. Also, the stored data may be loaded on a control unit for outdoor unit in batches, so that update processing time may be shortened. Accordingly, while the data are loaded on the control unit for outdoor unit, a time that an outdoor unit or an air conditioner stops may be shortened.

Moreover, since data are updated in a plurality of outdoor units at a time, update time may be shortened.

Additionally, since data, i.e., an update target, are first stored in an external memory and loaded on a control unit for outdoor unit when a specific signal is received, even if an on-boarding process of the data fails, the data may not be damaged. That is, even when the on-boarding process fails, it may be recovered by using the data stored in the external memory.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A network system equipped with at least one air conditioner, comprising:
the air conditioner comprising at least one indoor unit and at least one outdoor unit (200) and being configured to operate for air conditioning of a set space; and
a control device (100) being configured for updating set data in the air conditioner when being in a communication enabled connection to the air conditioner,
**characterized in that** the network system further comprises
a control unit (210) equipped in the air conditioner and being configured for receiving update data from the control device (100), the control unit being a control unit for outdoor unit for controlling an operation of the outdoor unit,
wherein the control unit (210) comprises:
an external memory (250) being configured for storing update data received from the control device (100);
an internal memory (215) being configured for selectively storing the update data stored in the external memory (250) on the basis of whether an update execute signal is received from the control device (100); and
a boot loader (213) being configured for reading the update data stored in the external memory (250) and loading the update data in the internal memory (215) when an update execute signal is received from the control device (100).

2. The network system according to claim 1, wherein the boot loader (213) being configured to operate to initialize data stored in the internal memory.

3. The network system according to any one of preceding claims, being configured such that an operation of the air conditioner stops when an update execute signal is received from the control device (100); and
while the operation of the air conditioner stops, the update data are loaded in the internal memory (215).

4. The network system according to any one of preceding claims, further comprising a central processing unit (211) being configured for writing update data on the external memory (250) once the update data are transmitted to the control unit.

5. The network system according to any one of preceding claims, wherein the control device (100) being configured to monitor an operating state of the air conditioner; and
when it is recognized that an operation of the air conditioner stops, update data are transmitted to the control unit.

6. The network system according to any one of preceding claims, wherein the control device (100) being configured to transmit control data for controlling an operation of the air conditioner to the air conditioner; and
when the control data and the update data are simultaneously transmitted to the air conditioner, the control unit being configured to process the transmitted control data and update data according to a reference information.

7. The network system according to claim 6, being configured such that according to the reference information, the update execute signal and the control signal are alternately processed at a time on the basis of the amount or format of data.

8. The network system according to any one of preceding claims, wherein the air conditioner and the control device are connected through an RS485 communication.

9. The network system according to any one of preceding claims, wherein the control device comprises:
a first control device (310) being configured for monitoring an operation of the air conditioner or generating the update execute signal; and
a converter (320) being configured for converting a data format in order to transmit data received from the first control device (310) to the air conditioner.

10. The network system according to claim 9, further comprising:
a first communication interface (360) arranged between the first control device (310) and the converter (320) and being configured to operate using a Transmission Control Protocol/Internet Protocol (TCP/IP) communication via internet; and
a second communication interface (370) arranged between the converter (320) and the air conditioner and being configured to operate using an RS485 communication method.

11. The network system according to any one of preceding claims, wherein the air conditioner is provided in plurality and the update data are updated simultaneously in the plurality of air conditioners.

12. A control method of a network system including an air conditioner with at least one indoor and at least one outdoor unit and a control device for controlling an operation of the air conditioner comprising:
connecting the control device with the outdoor unit for communication;
determining whether there are data that are to be updated from-the control device to the outdoor unit;
transmitting the data to the outdoor unit if there are the data;
storing the data in a first memory of the outdoor unit;
reading the data stored in the first memory using a boot loader when an update execute signal is generated from the control device; and
storing the data using the boot loader to a second memory of the outdoor unit.

## Patentansprüche

1. Netzwerksystem, das mit mindestens einer Klimaanlage ausgerüstet ist, mit:
der Klimaanlage, die mindestens eine Inneneinheit und mindestens eine Außeneinheit (200) aufweist und konfiguriert ist, zur Klimatisierung eines festgelegten Raums zu arbeiten; und
einer Steuervorrichtung (100), die zur Aktualisierung von Einstelldaten in der Klimaanlage konfiguriert ist, wenn sie sich in einer zur Kommunikation freigegebenen Verbindung mit der Klimaanlage befindet,
**dadurch gekennzeichnet, dass** das Netzwerksystem ferner aufweist eine Steuereinheit (210), die in der Klimaanlage eingerichtet und zum Empfang von Aktualisierungsdaten von der Steuervorrichtung (100) konfiguriert ist, wobei die Steuereinheit eine Steuereinheit für die Außeneinheit zum Steuern eines Betriebs der Außeneinheit ist,
wobei die Steuereinheit (210) aufweist:
einen externen Speicher (250), der zum Speichern von Aktualisierungsdaten konfiguriert ist, die von der Steuervorrichtung (100) empfangen werden;
einen internen Speicher (215), der zum selektiven Speichern der im externen Speicher (250) gespeicherten Aktualisierungsdaten auf der Grundlage konfiguriert ist, ob ein Aktualisierungsausführungssignal von der Steuervorrichtung (100) empfangen wird; und
einen Urlader (213), der zum Lesen der im externen Speicher (250) gespeicherten Aktualisierungsdaten und Laden der Aktualisierungsdaten in den internen Speicher (215) konfiguriert ist, wenn ein Aktualisierungsausführungssignal von der Steuervorrichtung (100) empfangen wird.

2. Netzwerksystem nach Anspruch 1, wobei der Urlader (213) konfiguriert ist, so zu arbeiten, dass er im internen Speicher gespeicherte Daten initialisiert.

3. Netzwerksystem nach einem der vorhergehenden Ansprüche, das so konfiguriert ist, dass ein Betrieb der Klimaanlage stoppt, wenn ein Aktualisierungsausführungssignal von der Steuervorrichtung (100) empfangen wird; und
während der Betrieb der Klimaanlage stoppt, die Aktualisierungsdaten in den internen Speicher (215) geladen werden.

4. Netzwerksystem nach einem der vorhergehenden Ansprüche, das ferner eine Zentraleinheit (211) aufweist, die zum Schreiben von Aktualisierungsdaten in den externen Speicher (250) konfiguriert ist, sobald die Aktualisierungsdaten zur Steuereinheit übertragen sind.

5. Netzwerksystem nach einem der vorhergehenden Ansprüche, wobei die Steuervorrichtung (100) konfiguriert ist, einen Betriebszustand der Klimaanlage zu überwachen; und wenn erkannt wird, dass ein Betrieb der Klimaanlage stoppt, Aktualisierungsdaten zur Steuereinheit übertragen werden.

6. Netzwerksystem nach einem der vorhergehenden Ansprüche, wobei die Steuervorrichtung (100) konfiguriert ist, Steuerdaten zum Steuern eines Betriebs der Klimaanlage zur Klimaanlage zu übertragen; und
wenn die Steuerdaten und die Aktualisierungsdaten gleichzeitig zur Klimaanlage übertragen werden, die Steuereinheit konfiguriert ist, die übertragenen Steuerdaten und die Aktualisierungsdaten gemäß Bezugsinformationen zu verarbeiten.

7. Netzwerksystem nach Anspruch 6, das so konfiguriert ist, dass gemäß den Bezugsinformationen jeweils das Aktualisierungsausführungssignal und das Steuersignal auf der Grundlage der Menge oder des Formats der Daten abwechselnd verarbeitet werden.

8. Netzwerksystem nach einem der vorhergehenden Ansprüche, wobei die Klimaanlage und die Steuervorrichtung durch eine RS485-Kommunikation verbunden sind.

9. Netzwerksystem nach einem der vorhergehenden Ansprüche, wobei die Steuervorrichtung aufweist:
eine erste Steuervorrichtung (310), die zum Überwachen eines Betriebs der Klimaanlage oder zum Erzeugen eines Aktualisierungsausführungssignals konfiguriert ist; und
einen Wandler (320), der zum Umwandeln eines Datenformats konfiguriert ist, um von der ersten Steuervorrichtung (310) empfangene Daten zur Klimaanlage zu übertragen.

10. Netzwerksystem nach Anspruch 9, das ferner aufweist:
eine erste Kommunikationsschnittstelle (360), die zwischen der ersten Steuervorrichtung (310) und dem Wandler (320) angeordnet und konfiguriert ist, unter Verwendung einer Kommunikation gemäß dem Übertragungssteuerungsprotokoll/Internetprotokoll (TCP/IP) über das Internet zu arbeiten; und
eine zweite Kommunikationsschnittstelle (370), die zwischen dem Wandler (320) und der Klimaanlage angeordnet und konfiguriert ist, unter Verwendung eines RS485-Kommunikationsverfahrens zu arbeiten.

11. Netzwerksystem nach einem der vorhergehenden Ansprüche, wobei die Klimaanlage in einer Vielzahl vorgesehen ist und die Aktualisierungsdaten gleichzeitig in der Vielzahl der Klimaanlagen aktualisiert werden.

12. Steuerverfahren eines Netzwerksystems, das eine Klimaanlage mit mindestens einer Inneneinheit und mindestens einer Außeneinheit und einer Steuervorrichtung zum Steuern eines Betriebs der Klimaanlage aufweist, das aufweist:
Verbinden der Steuervorrichtung mit der Außeneinheit zur Kommunikation;
Feststellen, ob es Daten gibt, die von der Steuervorrichtung zur Außeneinheit aktualisiert werden sollen;
Übertragen der Daten zur Außeneinheit, wenn es die Daten gibt;
Speichern der Daten in einem ersten Speicher der Außeneinheit;
Lesen der im ersten Speicher gespeicherten Daten mittels eines Urladers, wenn ein Aktualisierungsausführungssignal von der Steuervorrichtung erzeugt wird; und
Speichern der Daten mittels des Urladers in einem zweiten Speicher der Außeneinheit.

## Revendications

1. Système de réseau pourvu d'au moins un climatiseur, comprenant :
le climatiseur comprenant au moins une unité intérieure et au moins une unité extérieure (200), destiné à être mis en service pour la climatisation d'un espace donné ; et
un dispositif de commande (100) prévu pour mettre à jour les données d'ensemble du climatiseur lorsqu'une liaison de communication est activée entre lui et le climatiseur,
**caractérisé en ce que** ledit système de réseau comprend en outre :
une unité de commande (210) disposée dans le climatiseur et prévue pour recevoir des données de mise à jour du dispositif de commande (100), ladite unité de commande étant une unité de commande pour unité extérieure destinée à commander le fonctionnement de l'unité extérieure,
où l'unité de commande (210) comprend :
une mémoire externe (250) prévue pour stocker les données de mise à jour reçues du dispositif de commande (100) ;
une mémoire interne (215) prévue pour mémoriser sélectivement les données de mise à jour stockées dans la mémoire externe (250) sur la base de la réception d'un signal d'exécution de mise à jour provenant du dispositif de commande (100) ; et
un chargeur d'amorçage (213) prévu pour extraire les données de mise à jour stockées dans la mémoire externe (250) et charger les données de mise à jour dans la mémoire interne (215) quand un signal d'exécution de mise à jour est reçu du dispositif de commande (100).

2. Système de réseau selon la revendication 1, où le chargeur d'amorçage (213) est destiné à être lancé pour initialiser les données stockées dans la mémoire interne.

3. Système de réseau selon l'une des revendications précédentes, prévu de sorte que le fonctionnement du climatiseur est arrêté quand un signal d'exécution de mise à jour est reçu du dispositif de commande (100) ; et
pendant l'arrêt de fonctionnement du climatiseur stops, les données de mise à jour sont chargées dans la mémoire interne (215).

4. Système de réseau selon l'une des revendications précédentes, comprenant en outre une unité centrale de traitement (211) prévue pour écrire les données de mise à jour dans la mémoire externe (250) une fois les données de mise à jour transmises à l'unité de commande.

5. Système de réseau selon l'une des revendications précédentes, où le dispositif de commande (100) est prévu pour surveiller un état de fonctionnement du climatiseur ; et
où, lorsqu'un arrêt de fonctionnement du climatiseur est détecté, les données de mise à jour sont transmises à l'unité de commande.

6. Système de réseau selon l'une des revendications précédentes, où le dispositif de commande (100) est prévu pour transmettre au climatiseur des données de commande pour la commande de fonctionnement du climatiseur ; et
où, lorsque les données de commande et les données de mise à jour sont transmises simultanément au climatiseur, l'unité de commande est prévue pour traiter les données de commande et les données de mise à jour transmises conformément à une information de référence.

7. Système de réseau selon la revendication 6, prévu de sorte qu'en fonction de l'information de référence, le signal d'exécution de mise à jour et le signal de commande soient traités à tour de rôle sur la base de la quantité ou du format des données.

8. Système de réseau selon l'une des revendications précédentes, où le climatiseur et le dispositif de commande sont reliés par une liaison de communication RS485.

9. Système de réseau selon l'une des revendications précédentes, où le dispositif de commande comprend :
un premier dispositif de commande (310), prévu pour surveiller le fonctionnement du climatiseur ou générer le signal d'exécution de mise à jour ; et
un convertisseur (320) prévu pour convertir un format de données afin de transmettre au climatiseur des données reçues du premier dispositif de commande (310).

10. Système de réseau selon la revendication 9, comprenant en outre :
une première interface de communication (360) disposée entre le premier dispositif de commande (310) et le convertisseur (320) et prévue pour fonctionner au moyen d'une communication à protocole de commande de transmission (TCP/IP) via internet ; et
une deuxième interface de communication (370) disposée entre le convertisseur (320) et le climatiseur et prévue pour fonctionner au moyen d'une norme de communication RS485.

11. Système de réseau selon l'une des revendications précédentes, où le climatiseur est présenté en pluralité et les données de mise à jour sont mises à jour simultanément dans la pluralité de climatiseurs.

12. Procédé de commande d'un système de réseau avec un climatiseur comprenant au moins une unité intérieure et au moins une unité extérieure et un dispositif de commande destiné à commander le fonctionnement du climatiseur, comprenant :
l'établissement d'une liaison de communication entre le dispositif de commande et l'unité extérieure ;
les détermination si des données sont à mettre à jour par le dispositif de commande vers l'unité extérieure ;
la transmission des données à l'unité extérieure si les données sont présentées ;
le stockage des données dans une première mémoire de l'unité extérieure ;
l'extraction des données stockées dans la première mémoire au moyen d'un chargeur d'amorçage quand un signal d'exécution de mise à jour est généré par le dispositif de commande ; et
le stockage des données dans une deuxième mémoire de l'unité extérieure au moyen du chargeur d'amorçage.
